Europäisches Patentamt

European Patent Office

Office européen des brevets

(19)

(11) Numéro de publication: **0 071 548**
A2

(12) **DEMANDE DE BREVET EUROPEEN**

(21) Numéro de dépôt: 82420101.6

(22) Date de dépôt: 13.07.82

(51) Int. Cl.³: **A 47 J 27/16**

(30) Priorité: 31.07.81 FR 8115234

(43) Date de publication de la demande:
09.02.83 Bulletin 83/6

(84) Etats contractants désignés:
AT BE CH DE GB IT LI NL SE

(71) Demandeur: Jovanovic, Dragomir
6 Impasse Jean Moulin
F-38000 Pont-de-Claix Isère(FR)

(72) Inventeur: Jovanovic, Dragomir
6 Impasse Jean Moulin
F-38000 Pont-de-Claix Isère(FR)

(74) Mandataire: Perrier, Jean-Pierre et al,
Cabinet GERMAIN & MAUREAU 12 rue de la République
F-42000 St-Etienne(FR)

(54) Cuiseur-stérilisateur à vapeur.

(57) Ce cuiseur est du type comportant une chambre de cuisson dans laquelle les mets placés sont cuits par de la vapeur produite en portant de l'eau à ébullition au moyen d'une source de chaleur. Selon l'invention, la chambre de cuisson (5), d'une part, est délimitée par une virole cylindrique (2) munie d'un fond (10) et associée, à l'opposé de celui-ci, à une porte étanche (22) et, d'autre part, est séparée de la chambre (4) de production de vapeur qui, de forme annulaire, est délimitée par deux viroles, respectivement intérieure (2-58) et extérieure (3), communique, par sa partie inférieure, avec une réserve d'eau et comporte, au moins dans sa partie supérieure, au moins une buse (53) apte à injecter de la vapeur dans la chambre de cuisson (5) lorsqu'une source de chaleur (19), agissant à la partie inférieure de la chambre annulaire, porte à ébullition l'eau contenue dans celle-ci.

FIG.1

## Cuiseur-stérilisateur à vapeur-

L'invention concerne un cuiseur-stérilisateur à vapeur du type comportant une chambre de cuisson dans laquelle les mets sont cuits par de la vapeur produite en portant de l'eau à ébullition au moyen d'une source de chaleur.

Dans les cuiseurs actuels de ce type, la chambre de cuisson forme aussi chambre de production de vapeur, puisque l'eau nécessaire à cette production de vapeur est disposée dans le fond de la chambre de cuisson où elle est portée à ébullition par une source de chaleur disposée dans cette chambre ou agissant au-dessous.

En raison de cette construction, le volume occupé par l'eau est relativement important par rapport à celui de la chambre de cuisson où doit régner la vapeur. Il en résulte que la montée en pression est très lente, ce qui nécessite une quantité d'énergie importante pour obtenir la vapeur à la pression désirée dans le délai voulu, c'est-à-dire pour commencer la cuisson. Il en est de même, d'ailleurs, lorsqu'il faut recréer de la vapeur après que des moyens de sécurité, tels qu'un pressostat, aient arrêté temporairement le fonctionnement de la source de chaleur pour ne pas dépasser la pression maximale de sécurité dans le cuiseur.

Par ailleurs, dans la phase de mise en fonctionnement du cuiseur, la vapeur formée rencontre la paroi froide de la chambre de cuisson qui absorbe ainsi des calories au détriment des mets à cuire et de la rapidité de cuisson.

La présente invention a pour but de fournir un cuiseur à vapeur qui remédie à ces inconvénients et permet d'obtenir une mise en pression rapide de la chambre de cuisson, tant à la mise en fonctionnement que pour renouveler la vapeur, et conduit à une réduction du temps de chauffe, donc à une réduction de la quantité d'énergie nécessaire pour cuire un met.

A cet effet, la chambre de cuisson, d'une part, est délimitée par une virole cylindrique munie d'un fond et associée,à l'opposé de celui-ci,à une porte étanche et,d'autre part,est séparée de la chambre de production de vapeur qui,de forme annulaire,est délimitée par deux viroles,respectivement intérieure et extérieure,communique par sa partie inférieure avec une réserve d'eau et comporte,au moins dans sa partie supérieure,au moins une buse apte à injecter de la vapeur dans la chambre de cuisson lorsqu'une source de chaleur,agissant à la partie inférieure de la chambre annulaire,porte à ébullition l'eau contenue dans celle-ci.

Grâce à cette disposition,la quantité d'eau,disposée dans la chambre annulaire de production de vapeur,est réduite,ce qui permet d'obtenir,très rapidement,de la vapeur sous pression qui pénètre alors par les buses dans la chambre de cuisson.De plus,grâce à cette disposition, les parois de la chambre de cuisson sont portées très rapidement à la température normale de fonctionnement,ce qui réduit considérablement les condensations de vapeur sur ces parois du côté cuisson,dans la phase de mise en fonctionnement du cuiseur et pendant la cuisson.

Dans une forme de réalisation,les buses d'injection de vapeur sont constituées par des orifices de très faible diamètre,répartis sensiblement sur le tiers supérieur de la virole intérieure et ayant un axe longitudinal sensiblement radial,de manière à diriger la vapeur directement dans la zone où est déposé le met à cuire.

De par leur faible dimension,ces orifices s'opposent temporairement au passage de la vapeur et créent ainsi une perte de charge permettant d'obtenir une augmentarion de pression rapide dans la chambre de production de vapeur et,de ce fait,une projection de vapeur en direction des mets,entrainant un début de cuisson,même avant que la pression de fonctionnement soit atteinte dans la chambre de cuisson.

D'autres caractéristiques et avantages ressortiront de la description qui suit en référence au dessin schématique annexé représentant,à titre d'exemple non limitatif, une forme d'exécution du cuiseur selon l'invention.

Figures 1 et 2 sont des vues respectivement en coupe transversale et en coupe longitudinale du cuiseur,

Figure 3 est une vue partielle en coupe longitudinale montrant,à échelle agrandie,une forme d'exécution des moyens de verrouillage de la porte,

Figure 4 est une vue en coupe transversale montrant plus en détail les tiges de verrouillage de la porte,

Figure 5 est une vue en coupe d'une autre forme de réalisation de ce cuiseur.

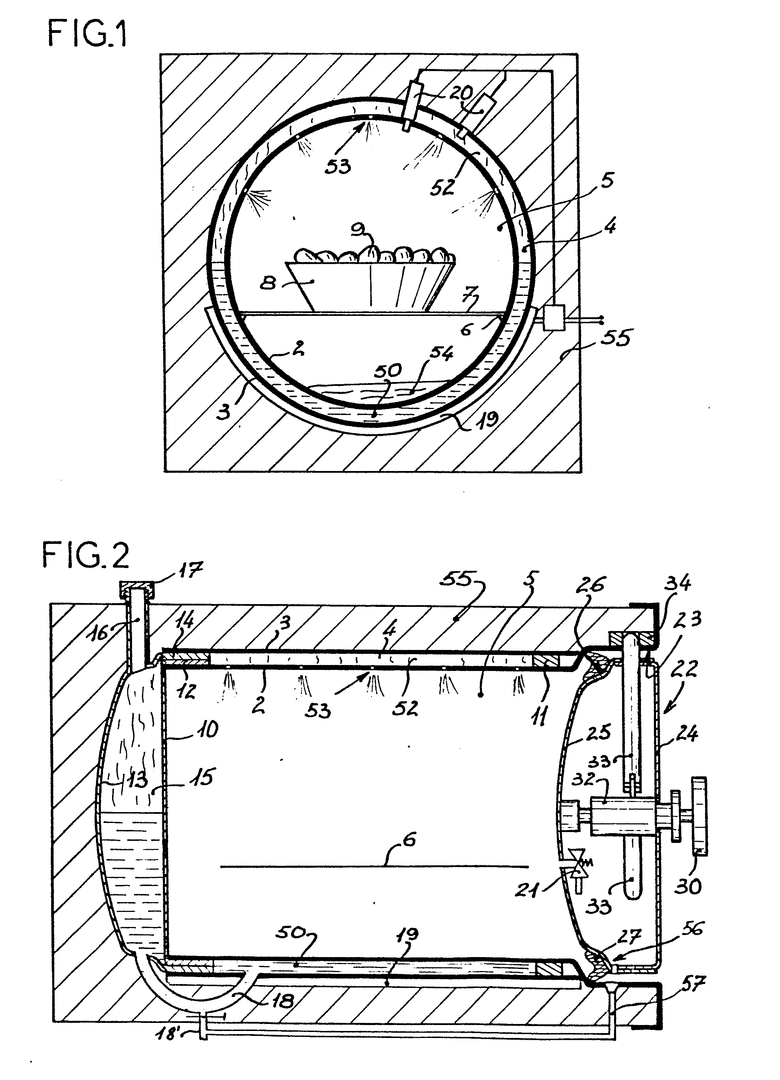

Comme montré aux figures 1 et 2,le cuiseur est composé de deux viroles,respectivement intérieure 2 et extérieure 3,délimitant entre elles une chambre annulaire 4 de production de vapeur.La virole 2 délimite elle-même la chambre de cuisson 5 munie de moyens 6 de positionnement d'une grille 7 destinée à recevoir un récipient 8 contenant le met 9 dont il faut assurer la cuisson.La chambre de cuisson 5 est obturée par un fond plat 10 muni d'une collerette 12 qui s'emboîte sur l'extrémité postérieure de la virole 2.Ce fond est associé à un fond bombé 13 également muni d'une collerette 14 venant coiffer la collerette 12 du fond 10. La chambre 15,ainsi réalisée,constitue réserve d'eau.Elle communique avec l'extérieur par un conduit 16 d'alimentation en eau muni d'un bouchon vissé étanche 17 servant d'orifice de remplissage manuel.La chambre 15 communique avec la chambre annulaire 4 par un conduit coudé 18 disposé à sa partie inférieure.Ce conduit est raccordé à un tube de vidange 18' muni d'un robinet et permettant d'effectuer le détartrage du cuiseur.

A leurs extrémités antérieures,les deux viroles 2 et 3 sont reliées par une entretoise annulaire 11 obturant de manière étanche la chambre annulaire 4.En raison de cette construction,la largeur de la chambre 4 est très faible, puisqu'égale à l'épaisseur des collerettes 12 et 14.Son volume est,de ce fait,vingt à cinquante fois plus petit que celui intérieur de la chambre de cuisson 5.

Dans la forme d'exécution représentée,la source de chaleur,nécessaire au fonctionnement de ce cuiseur,est constituée par une résistance électrique 19 plaquée contre la partie inférieure et extérieure de la virole 3 de la chambre annulaire 4. L'alimentation de cette résistance est contrôlée par des pressostats 20 détectant la pression régnant respectivement dans les chambres de cuisson 5 et de production de vapeur 4. Une soupape de sûreté 21 protège les deux chambres contre toute surpression.

Cette chambre de cuisson 5 est obturée,à son extrémité antérieure,par une porte étanche 22 disposée dans un logement 23 de plus grand diamètre que celui de la chambre de cuisson 5 et formée par évasement de la virole intérieure 2.Cette porte est en forme de caisson et est formée par l'association d'un fond plat 24,identique à celui 10 de la chambre de cuisson,avec un fond bombé 25 identique à celui 13,et ceci de manière à réduire le coût de fabrication du cuiseur.

Comme montré plus particulièrement à la figure 2,le fond bombé 25 est muni localement d'une gorge périphérique 26 dans laquelle se loge un joint à lèvre 27 assurant l'étanchéité de la fermeture en venant en contact avec la paroi du logement.

Il est à noter que,sous l'effet de la pression régnant dans la chambre de cuisson,la lèvre extérieure du joint 27 est plaquée avec un plus grand effort et assure donc une meilleure étanchéité.Cette porte qui,de façon connue,est articulée ou basculante,est également munie de moyens de verrouillage composés d'un bouton de manoeuvre 30,d'un moyeu 32,de tiges 33 et de gâches 34 débouchant du logement 23 de la virole intérieure 2.

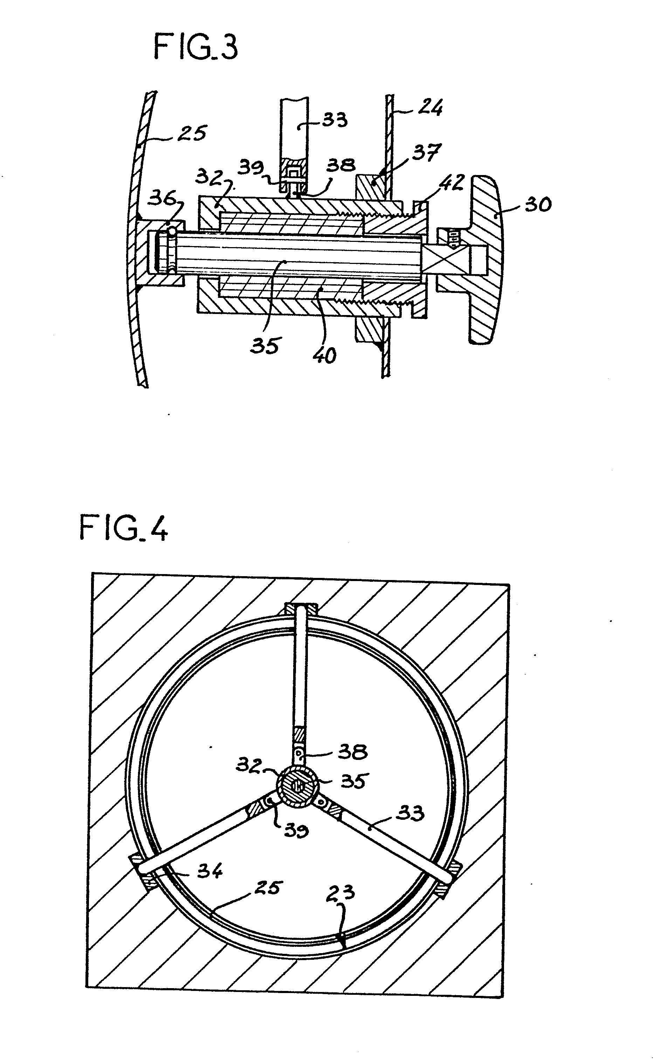

Comme montré plus en détail aux figures 3 et 4,la poignée de manoeuvre 30 est solidaire en rotation d'un arbre 35 monté libre en rotation dans un palier 36 solidaire du fond 25. Le moyeu 32,en forme de boîtier,est monté libre en rotation dans un palier 37 solidaire du fond 22.Il comporte également plusieurs bras radiaux 38 sur lesquels sont articulées,en 39,les tiges de verrouillage 33.La liaison en rotation entre l'arbre 35 et le boîtier 32 est assurée par friction au moyen d'une bague annulaire 40, en matière déformable à fort coefficient de frottement, disposée entre le moyeu et l'arbre et comprimée par une douille filetée 42, de réglage de la friction.

Cet entrainement par friction constitue dispositif de sécurité contre l'ouverture inopinée de l'appareil sous pression en ne transmettant pas le mouvement de rotation de l'arbre 35 au moyeu 32, lorsque les tiges 33 sont plaquées fortement contre leur gâche par la totalité de la pression s'exerçant sur la face intérieure convexe de la porte. Le couple d'entrainement du moyeu 32 est toujours réglé pour être inférieur au couple nécessaire pour actionner les tiges quand l'appareil est sous pression. De plus, les extrémités de ces tiges et les faces correspondantes des gâches sont agencées pour augmenter le frottement sous l'action de la pression. Il est évident que la rotation du boîtier 32 est limitée à une fraction de tour par des moyens de butée connus et non représentés.

Lorsque le récipient 8 a été introduit dans la chambre de cuisson 5 et que la porte 22 est fermée, la résistance 19 est alimentée et transmet immédiatement son énergie calorifique à la partie inférieure de la virole intérieure 2. Cette énergie chauffe l'eau 50 contenue dans la chambre annulaire 4 et assure très rapidement la formation de vapeur 52 à la partie supérieure de la chambre annulaire. La paroi de la virole intérieure 2 étant munie de plusieurs séries d'orifices 53 de très faible dimension constituant buses d'injection de vapeur, la vapeur pénètre ainsi dans la chambre de cuisson sous la forme de jets orientés sensiblement radialement en direction du récipient 8 et de l'aliment 9.

Le recours à des orifices de faible diamètre permet de créer une résistance au passage de la vapeur, résistance qui, lorsqu'elle est vaincue, conduit à des jets de vapeur pénétrant dans la chambre de cuisson en direction des mets et assurant le début de cuisson avant que cette chambre 5 soit à sa pression de fonctionnement.Grâce à la structure des moyens de production de vapeur,celle-ci est très rapidement obtenue,ce qui procure un gain dans le bilan énergétique total.

Par ailleurs,lorsque la vapeur pénètre dans la chambre de cuisson 5,les parois délimitant celle-ci sont déjà portées à la température de cuisson,de sorte que la vapeur ne tend pas à se condenser sur ces parois au détriment de son utilisation pour les aliments.

Enfin,la vapeur qui se condense au contact des aliments et qui tombe en gouttelettes dans le fond de la chambre de cuisson,comme représenté en 54,forme une nappe d'eau qui est maintenue à la température de cuisson par contact avec la virole 2 et est donc thermiquement neutralisée.

Lorsque la pression dans la chambre de cuisson 5 dépasse une valeur considérée comme étant le seuil de sécurité et, par exemple,dépasse un bar,les pressostats 20 coupent l'alimentation de la résistance 19,ce qui conduit à l'arrêt instantané de l'injection de vapeur,compte tenu de la petite inertie du bain.De façon connue,il en résulte une baisse de pression dans la chambre de cuisson 5 qui est enregistrée par l'un des pressostats déclenchant alors,à nouveau,l'alimentation des résistances 19.Dans ces conditions, et grâce à la grande surface de chauffe fournie par la résistance 19 et la forme particulière de la chambre annulaire,la vapeur se reforme très rapidement.

Il ressort de ce qui précède que le cuiseur,selon l'invention,grâce à un temps de mise en pression très court et à une très faible inertie de redémarrage,permet de réduire le temps de cuisson et,en conséquence,la consommation d'énergie nécessaire.

Grâce à la forme annulaire du bain soumis au chauffage,une faible variation de volume consommé entraine une forte variation de niveau,ce qui,dans une forme d'exécution plus élaborée,favorise l'utilisation de sondes de niveaux ordinaires pour commander l'électro-vanne de remplissage et de maintien de niveau de la chambre annulaire et évite donc d'avoir recours à des sondes précises,comme c'est le cas dans les cuiseurs traditionnels à faible variation de niveau.

Bien que la forme d'exécution ci-dessus semble plus avantageuse,car en utilisant une résistance électrique, elle permet de disposer l'ensemble du cuiseur dans un calorifugeage 55,il est également possible d'utiliser,comme source de chaleur,des rampes de brûleurs réparties en arc-de-cercle à la partie inférieure et à l'extérieur de la chambre annulaire 4.

Avantageusement,la soupape de sûreté 21 est disposée dans la porte 22.Elle est fixée sur le fond 25 et logée entre ce fond et celui 24.Ainsi,lorsque la soupape fonctionne,la vapeur ne s'échappe pas dans l'atmosphère,mais dans la porte.L'eau,obtenue par condensation sur les faces internes de la porte,s'accumule au bas de cette dernière d'où elle est évacuée par un perçage 56.Dans une forme d'exécution,ce perçage fait vis-à-vis à l'orifice de sortie d'un conduit 57,aboutissant au conduit de vidange 18'.

A titre d'exemple,avec un cuiseur dont la chambre de cuisson a un diamètre intérieur de 220 millimètres pour une longueur de 325 millimètres,donc ayant un volume intérieur de sensiblement 12 dm$^3$,et dont la chambre annulaire de production de vapeur a un volume de sensiblement 0,4dm$^3$, le temps nécessaire pour cuire 6 kilogrammes de pommes de terre,avec une résistance de 2,5 kw,est de huit minutes.

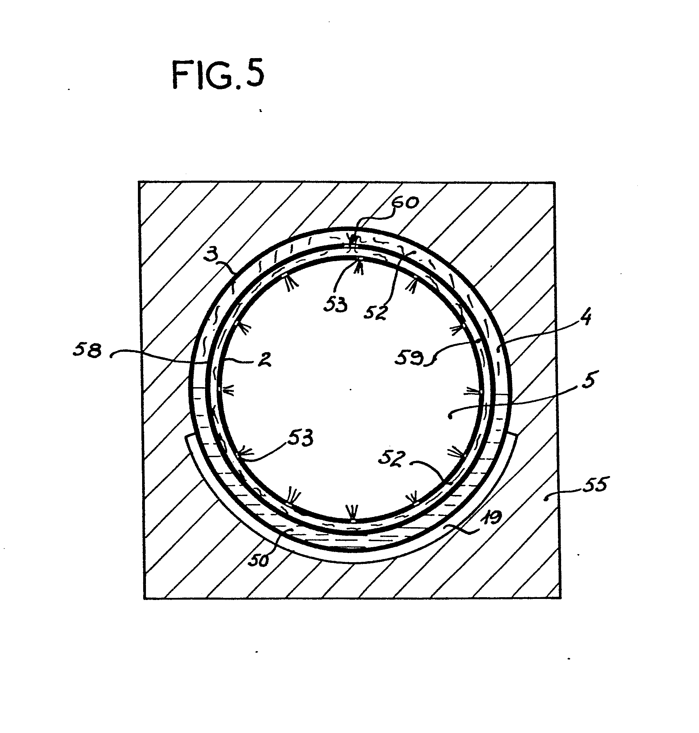

Dans la forme d'exécution de ce cuiseur représentée à la figure 5,la chambre de production de vapeur 4 est délimitée entre une virole extérieure 3 et une virole intérieure 58 qui est distincte de la virole intérieure 2 avec laquelle elle délimite une chambre de diffusion 59.

La virole 58 comporte au moins une buse de transfert 60 qui permet à la vapeur 52,formée dans la chambre 4,de pénétrer dans la chambre de diffusion 59.Cette buse de transfert a un diamètre assez grand de manière à ne pas créer de pertes de charge augmentant la pression dans la

8

chambre 4.Elle peut être associée à d'autres buses de même type.La virole 2,constituant virole de distribution, comporte sur toute sa périphérie des buses d'injection 53 constituées par des orifices de faible diamètre,de manière à créer des pertes de charge favorisant la formation de jets de vapeur dès que celle-ci pénètre dans la chambre de diffusion 59.Bien entendu,les jets de vapeur sont dirigés radialement.

Dans cet agencement,la vapeur produite dans la chambre 4 est distribuée de manière uniforme dans toute la chambre de cuisson,ce qui contribue à accélérer la cuisson des aliments.

De par sa structure,ce cuiseur peut également être utilisé comme stérilisateur.Il est à noter que,quelle que soit son application,il permet de disposer les produits à cuire ou à stériliser dans la presque totalité de son volume intérieur en ayant recours,soit à des paniers circulaires,soit à des claies étagées.

Dans les formes d'exécutions décrites ci-dessus,les différentes viroles sont représentées comme étant coaxiales,mais il est évident qu'elles peuvent être excentrées les unes par rapport aux autres.

9

## -REVENDICATIONS-

1-Cuiseur-stérilisateur à vapeur du type comportant une chambre de cuisson dans laquelle les mets placés sont cuits par de la vapeur produite en portant de l'eau à ébullition au moyen d'une source de chaleur,caractérisée en ce que ladite chambre de cuisson (5),d'une part,est délimitée par une virole cylindrique (2) munie d'un fond (10) et associée,à l'opposé de celui-ci,à une porte étanche (22) et,d'autre part,est séparée de la chambre (4) de production de vapeur qui,de forme annulaire,est délimitée par deux viroles,respectivement intérieure (2-58) et extérieure (3),communique,par sa partie inférieure,avec une réserve d'eau et comporte,au moins dans sa partie supérieure,au moins une buse (53) apte à injecter de la vapeur dans la chambre de cuisson (5) lorsqu'une source de chaleur (19),agissant à la partie inférieure de la chambre annulaire,porte à ébullition l'eau contenue dans celle-ci.

2-Cuiseur selon la revendication 1,caractérisé en ce que la virole intérieure de la chambre de production de vapeur (4) est constituée par celle (2) de la chambre de cuisson (5) et comporte,dans sa partie supérieure,plusieurs buses (53).

3-Cuiseur selon la revendication 1,caractérisé en ce que la virole intérieure (58) de la chambre de production de vapeur (4) comporte,à sa partie supérieure,au moins une buse (60) de transfert de la vapeur dans une chambre de diffusion (59),délimitée entre cette virole (58) et une virole de distribution (2) disposée à l'intérieur de cette dernière délimitant la chambre de cuisson (5) et comportant,sur toute sa périphérie,des buses d'injection de vapeur (53).

4-Cuiseur à vapeur selon l'une quelconque des revendications 1 à 3,caractérisé en ce que la réserve d'eau est formée entre le fond plat (10) de la chambre de cuisson et un fond bombé (13),est munie d'un conduit de remplissage (16) et communique avec la chambre annulaire (4) par au moins une conduite (18) disposée à sa partie inférieure et raccordée à un tube (18') de vidange et de détartrage.

5-Cuiseur selon l'une quelconque des revendications 1 à 4,caractérisé en ce que les buses d'injection de vapeur sont constituées par des orifices (53) de très faible diamètre ayant un axe longitudinal sensiblement radial,de manière à diriger la vapeur directement sur le met à cuire.

6-Cuiseur selon la revendication 4,caractérisé en ce que le fond plat (10) de la chambre de cuisson est muni d'une collerette (12) coiffant l'extrémité postérieure de la virole intérieure (2) et coiffée elle-même par une collerette (14) du fond bombé (13),cette dernière collerette pénétrant à l'intérieur de l'extrémité postérieure de la virole extérieure (3) dont l'extrémité antérieure est séparée de celle de la virole intérieure par une entretoise annulaire étanche (11).

7-Cuiseur selon la revendication 6,caractérisé en ce que la virole intérieure (2) présente,en avant de sa partie constituant la chambre annulaire de production de vapeur,un logement (23) de plus grand diamètre que celui de la chambre de cuisson (5) et constituant logement pour la porte (22).

8-Cuiseur selon l'ensemble des revendications 6 et 7, caractérisé en ce que la porte (22),de type articulée, composée de deux fonds (24-25) emboîtés l'un dans l'autre pour former caisson,est munie d'un joint périphérique à lèvre (27) apte à venir contre le logement (23) de la virole intérieure et comporte,dans sa partie centrale,un moyeu (32) qui,relié à une poignée de commande (30),est solidaire de bras radiaux (38) sur lesquels sont articulées des tiges de verrouillage (33) dont les extrémités, saillant de la porte,sont aptes à pénétrer dans des gâches (34) débouchant du logement (23) de la virole intérieure (3).

9-Cuiseur selon la revendication 8,caractérisé en ce que la poignée de commande de verrouillage (30) de la porte est solidaire d'un arbre (35) monté libre en rotation

11

dans cette dernière, tandis que le moyeu (32), également monté libre en rotation dans cette porte, a la forme d'un boîtier contenant une bague (40) en matière déformable qui, traversée par l'arbre précité et comprimée par un moyen réglable (42) assure, par friction, la liaison en rotation de l'arbre (35) et du moyeu (32).

10-Cuiseur selon la revendication 8, caractérisé en ce que la porte (22), sur le fond bombé (25) de laquelle est fixée une soupape de sécurité (21) disposée entre ce fond et le fond plat (24), comporte, à sa partie inférieure, un perçage (56) d'évacuation des condensats communiquant avec l'orifice (57) d'un conduit raccordé au conduit de vidange (18').

11-Cuiseur selon l'une quelconque des revendications 1 à 10, caractérisé en ce que le volume intérieur de la chambre annulaire de production de vapeur a une valeur comprise entre le 1/20 et le 1/50 de celle du volume intérieur de la chambre de cuisson.

FIG.1

FIG.2

# FIG.3

# FIG.4

# FIG.5